# EUROPEAN PATENT SPECIFICATION

(11) **EP 1 598 582 B1**
(45) Date of publication and mention of the grant of the patent: **31.10.2007**
(21) Application number: 04425363.1
(22) Date of filing: 19.05.2004
(51) Int. Cl.: F16L 7/00

(54) **Adapter for spacer for pipes such as gas pipelines, oil pipelines and the like**
Modularer Distanzhalter für hindurchgeführte Rohre
Entretoise modulaire pour tuyaux concentriques

(43) Date of publication of application: 23.11.2005
(73) Proprietor: Stampa Tecnica Articoli Materiali Plastici- S.T.A.M.P. S.P.A., 20064 Pozzuolo Martesana, Milano (IT)
(72) Inventor: Guerini Carlo, 20100 Milano (IT)
(74) Representative: Petruzziello, Aldo

(56) References cited:
- DE-U- 9 114 077
- GB-A- 1 332 676
- US-A- 5 441 082

## Description

The invention relates to the field of the spacing collars for pipes.

In the field, for example, of the gas pipes or pipelines, of the water pipelines or the like, where the pipe which forms the gas pipe has to pass, for example, under a road or another section of a route with particular stress, it is common and mandatory practice for it to be enclosed by an additional pipe, generally also in metal, intended to withstand mechanical stresses. In order to avoid unwanted contacts and the transmission of current between the internal pipe for carrying gas and the external mechanically resistant pipe, a spacing collar in an insulating material (or a series of spacing collars) is placed around the internal pipe, axially spaced one from the other.

These spacing collars are attached, spaced axially, on a portion of internal pipe and said pipe, supported by the spacing collar, is made to slide inside the external pipe, or shell pipe, to the position required. The spacing collar thus also is an assembly means and it is important that it allows excellent sliding without friction.

A spacing collar generally comprises one or more elements formed by a base band or plate, designed to be bent around the internal pipe, whereon a plurality of ridges are formed in a single piece and arranged radially in relation to the internal pipe. The ends of the ridges touch the external pipe, keeping it distanced from the internal one.

It is clear that a collar is made in accordance with the desired distance between the pipes, i.e. with the difference between the inside diameter of the external pipe and the outside diameter of the internal pipe. For this reason various types of collars are available commercially, with ridges of different heights in accordance with the differences in diameters between the internal and external pipes.

In the case wherein large distances are required between the pipes, the collar must have very high radial ridges. In this case there are constructional restrictions of moulding or machining for obtaining collars with very high ridges. Moreover, a collar with high ridges will occupy a very large volume, with consequent problems of bulk, storage and transport.

In general, known spacing collars are made in a plastic material such as polyethylene, which is sufficiently elastic to be bent around the internal pipe. This material is inadequate when the ridges of the collars -working with very heavy pipes - are subjected to high pressures or when they are subjected to high friction, having to slide for a long length within the pipe, particularly within a pipe with a high degree of roughness (for example a concrete pipes).

Another disadvantage of the known collars is that, when they are installed, their ridges prevent the passage of one or more service pipes (holding electrical cables, for example) in the cavity between the internal pipe and external pipe.

One disadvantage whereto the pipes are subject is the seepage of water in the external pipe which often reaches such a level that it comes into contact with the lower part of the internal pipe which, by means of the spacing collars, is mounted axially in the external pipe. This floating of the internal pipe, in addition to jeopardising its insulation, leads to its rapid corrosion and deterioration.

DE 91 14 077 U discloses an adapter for pipelines and the like, suitable to be coupled to a ridge of a spacing element to extend its height in accordance with the difference in diameter values between the internal pipe and the external pipe of a pipeline

The adapted is rectangular in shape, comprises an upper part smaller in size and is provided with ribs and with at least a siege suitable to receive fixing means inserted in a hole provided in a ridge of the spacing element.

Object of the present invention is to overcome the drawbacks of the prior art by providing an adapter element which is versatile and suitable for attachment to various types of spacing collars for pipes so as to adapt the collar to various application possibilities.

Another object of the present invention is to provide an adapter element, which is strong and reliable, which can be produced at low costs and fitted easily and which can be composed of a single element or of several modular elements.

These objects were achieved with an adapter for a spacing collar as claimed in independent claim 1. Further new and useful features are claimed in the subsequent claims.

The adapter according to the invention is attached to a spacer for pipes such as gas pipelines, oil pipelines and the like. The spacer comprises at least one spacing element comprising a base band which can be attached to the external surface of an internal pipe and a plurality of ridges projecting from the base band in such a way that their ends come into contact with the internal surface of an external pipe to maintain it separate from said internal pipe. The adapter can be coupled to said ridge so as to prolong its height in accordance with the difference in diameter between said internal pipe and said external pipe

The present invention entails various advantages in its field of application:
- the adapter can be made in any height, without limitations caused by constructional restrictions of machining and of moulding;
- it is possible to standardise the collar which is personalised in terms of height with the adapter elements which are added at the time of sale or directly on site;
- the separate availability of the spacers and of the adapters considerably reduces transport and storage volumes with high savings in costs;
- it is possible not to provide one or more rows of adapters mounted on the spacing collar so as to leave sufficient free space for allowing the passage of service pipes in turn surrounded by respective spacing collars:;
- the adapter can be produced in materials different from that of the collar to increase the performances of pressure resistance;
- the adapter can be modularly built-up in height with other adapters;
- the use of adapters of different height on a spacing collar allows to assembly of the internal pipe eccentrically in relation to the external pipe, preventing the internal pipe from coming into contact with water which may possibly seep the external pipe;
- adapters in progressive height can be mounted on the spacing collar, considerably improving the contact with the external pipe and touching it in several points. As a result there is an improved distribution of the load on the spacing collar.

Embodiments of the invention will be described herein below with reference to the accompanying drawings, wherein they are illustrated solely by way of non-limiting examples, and in which:
Fig. 1 is a plan view of a first known spacing element, shown extended;
Fig. 2 is a sectional view along the plane denoted by II-II in Fig. 1;
Fig. 3 is a front elevation view, partially sectioned, showing a first embodiment of an adapter element suitable for attachment to the spacer of Figs. 1 and 2;
Fig. 4 is a cross-sectional view along the plane denoted by IV-IV in Fig. 3;
Fig. 5 is a partially cross-sectional view showing the adapter element of Fig. 4 mounted on a ridge of the spacer of Fig. 2;
Fig. 6 is a front elevation view showing a variant of the adapter element of Fig. 3;
Fig. 7 is a plan view of a second known spacing element, shown extended;
Fig. 8 is a side elevation view, partially sectioned, of the spacing element of Fig. 7;
Fig. 9 is a front elevation view, partially sectioned, showing a second embodiment of an adapter element suitable to be attached to the spacer of Figs. 7 and 8;
Fig. 10 is a cross-sectional view taken along the section plane X-X of Fig. 9;
Fig. 11 is a plan view from below of the adapter element of Fig. 9;
Fig. 12 is a cross-sectional view showing the adapter element of Fig. 10 mounted on a ridge of the spacer of Fig. 8;
Fig. 13 is a cross-sectional view showing the application of the adapters according to the invention to achieve an eccentric assembly of the internal pipe in relation to the external pipe; and
Fig. 14 is a view like Fig. 13, wherein the assembly of a service pipe is shown.

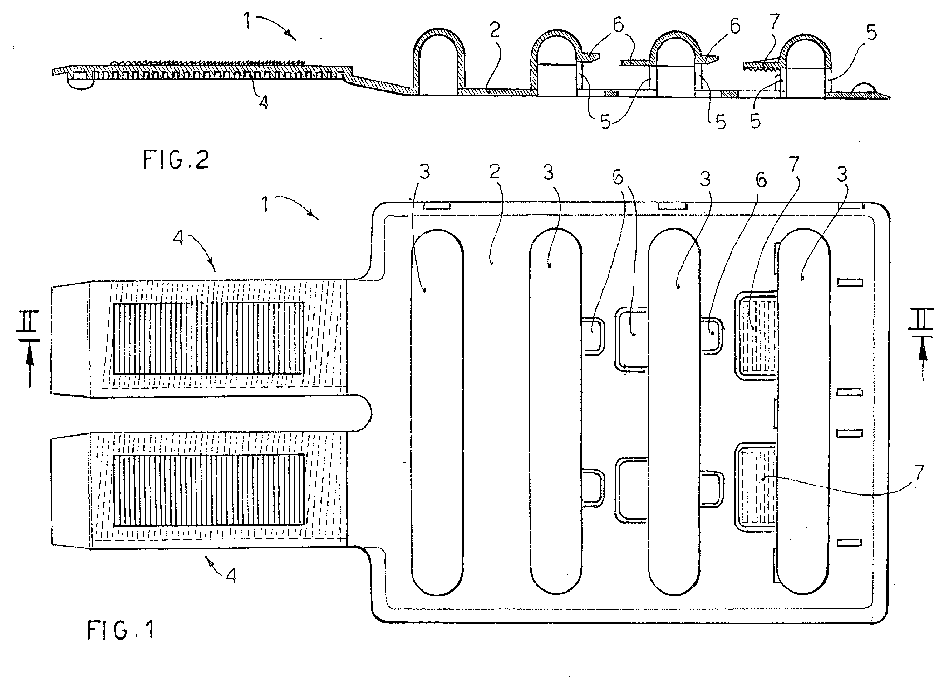

Figs. 1 and 2 show a first known spacing element 1, such as that described in the European patent EP 1 262 700 in the name of the same Applicant. The spacing element 1 comprises a base band 2, substantially flat in the absence of applied forces and flexible. Slide spacing ridges 3 project upwards from one face of the band 2. The spacing ridges 3 can have any shape known in the field and preferably they have a shape with a rounded section and with an elongated plan and can be configured with various heights in relation to the plane of the base band, according to the radial distance to be maintained between the internal pipe and the external pipe.

Toothed coupling tabs 4 extend from one side of the band 2. Starting from the end opposite to the tabs 4, the ridges 3 have at the respective bases (Fig. 2) aligned openings 5 which overall form a housing for a tab 4. Some ridges 3 have guide fins or strips 6, which guide the insertion of the tabs 4 in the openings 5. The furthest end ridge from the tabs 4 has toothed retaining fins 7, which engage, with the teeth of the tabs 4. The guide strips 6 and the retaining fins 7 extend above the openings 5.

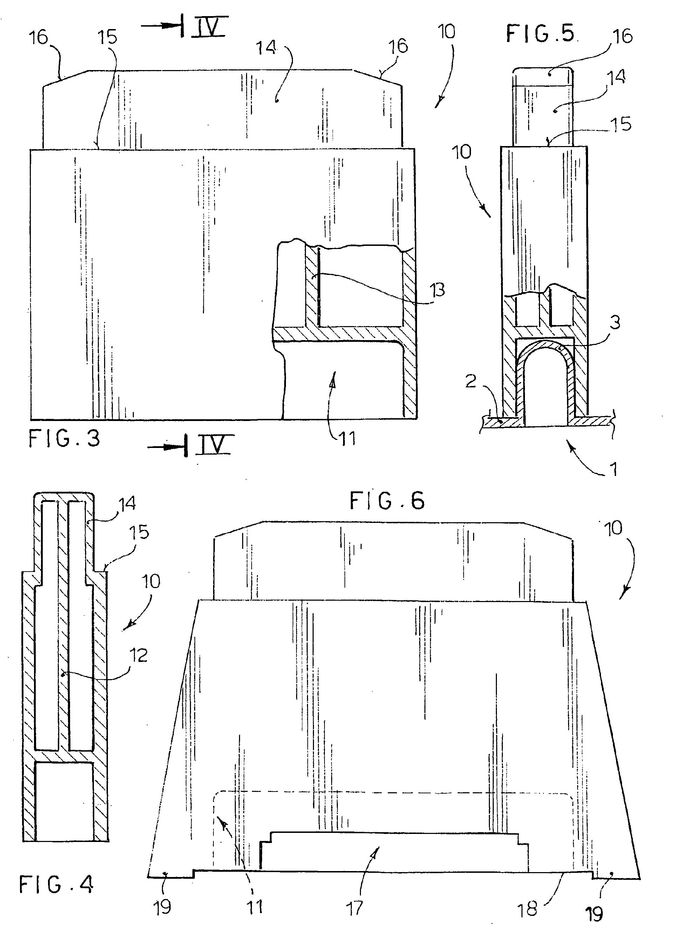

Referring to Figs. 3 and 4, a first embodiment of an adapter element 10 according to the invention is described. The adapter element 10 has a substantially flattened parallelepiped shape and is open at the bottom to define a seat 11 having dimensions such as to accommodate a ridge 3 of the spacer 1 as shown in Fig. 5.

The coupling between the adapter element 10 and the ridge 3 of the spacer can be pressure-forced, simply slotted, snap-slotted and the like. For a firmer coupling, alternatively or additionally, adhesive means such as glue or mechanical means such as rivets, nails, bolts and the like passing through the adapter 10 and the ridge 3 can be used. The mechanical means are preferably in a non-conducting material, such as plastic. In the case wherein both the adapter 10 and the ridge 3 are made in a heat-sealable plastic material, they can be heat-sealed one to the other as a further attachment system.

The adapter element 10 can be of any height, for example a height that can vary from twice to 10 times the height of the ridge 3 whereon it is coupled. The body of the adapter 10 can be hollow internally, with possible reinforcement ribs 12 and 13.

The adapter element 10 can be made in a plastic material through injection moulding. The same material as that of the spacing collar 1 can be used, such as for example PE (polyethylene).

In order to achieve improved compression load and abrasion resistance performances, the adapter element 10 can be made in a material different from that of the spacing element which has to fulfil certain requirements of flexibility. In this case the adapter element 10 can be made in polyamide (nylon™) filled with glass fibre, in carbon fibre, in ceramic or in polymethylmethacrylate (PMMA).

In the case wherein the adapter element 10 is to be subjected to high compression and bending loads, it can be made in the form of an insert or core in steel covered with an insulating material, such as polyethylene (PE) which guarantees insulation of the steel core.

In the case wherein the external pipe is made in a rough material, such as concrete, in order to further improve the friction performances the tip or the entire adapter element 10 can be covered with a self-lubricating material with a low friction coefficient such as Teflon.

The upper part 14 of the adapter element 10 is preferably smaller in size when compared to the central part so as to define a peripheral abutment edge 15. In this way the upper part 14 of an adapter element 10 can be inserted in the base housing 11 of another adapter element, thus allowing a modular build-up in height of several adapter elements 10 so as to achieve the height required. The corners 16 of the upper part of the adapter are bevelled to overcome obstacles such as surface unevenness in concrete pipes or welds in metal pipes. The bevelled corners 16 also facilitate insertion of another adapter in the seat 11.

In order to attach the adapter element 10 also to the ridges 3 wherein the openings 5, the guide strips 6 and the retaining tabs 7 are present, a variant has been conceived as shown in Fig. 6. In this case the adapter element 10 has, in its lower part, a through slot 17 which is placed in register with the openings 5 for the passage of the tabs 4 of the spacing element. The guide strips 6 and the retaining tabs 7 can also pass through the slot 17.

Moreover, to ensure a greater stability of the adapter element 10, it may have a substantially trapezoidal shape with a larger base 18 which has two sections 19 which extend outside of the band 2 of the spacing element 1.

Herein below elements which are the same as or correspond to those already described are denoted by the same reference numerals and their detailed description is omitted.

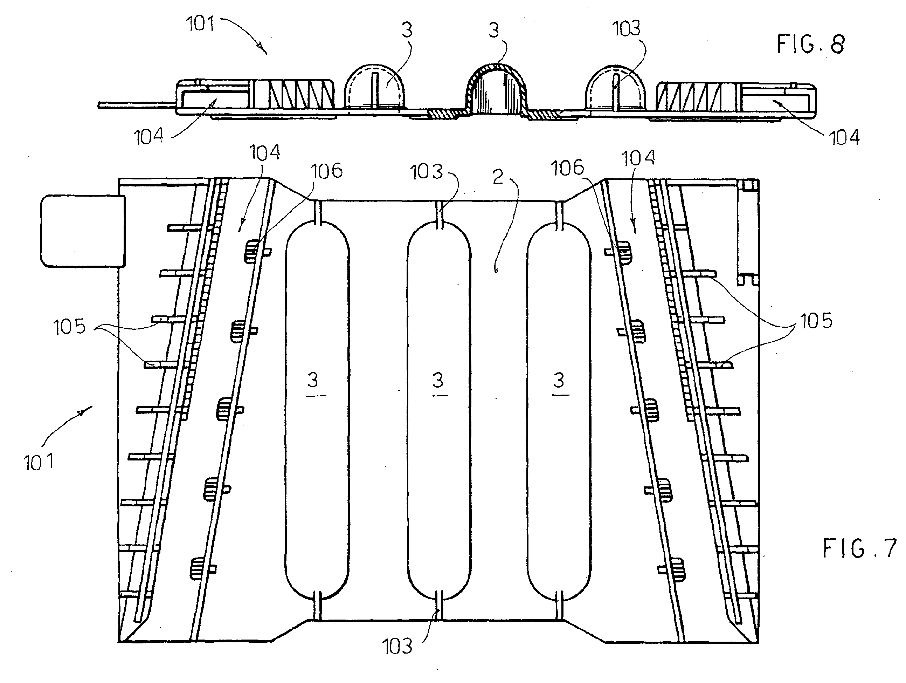

Figs. 7 and 8 show a known spacing element 101, such that described in Italian patent IT 1 301 565 in the name of the same Applicant. The spacing element 101 differs from the spacing element 1 described previously in that it provides engaging means in the form of slides 104 opposingly slanted and provided with retaining means 105 and 106. In this case a joining and locking element (not shown in the figures) is provided, having slanted engaging parts with which it engages and locks the engaging means of the same spacing element closed in a loop, or two adjacent spacing elements.

Moreover each ridge 3 has at its opposite ends two ribs 103 which extend until the ends of the base band 2.

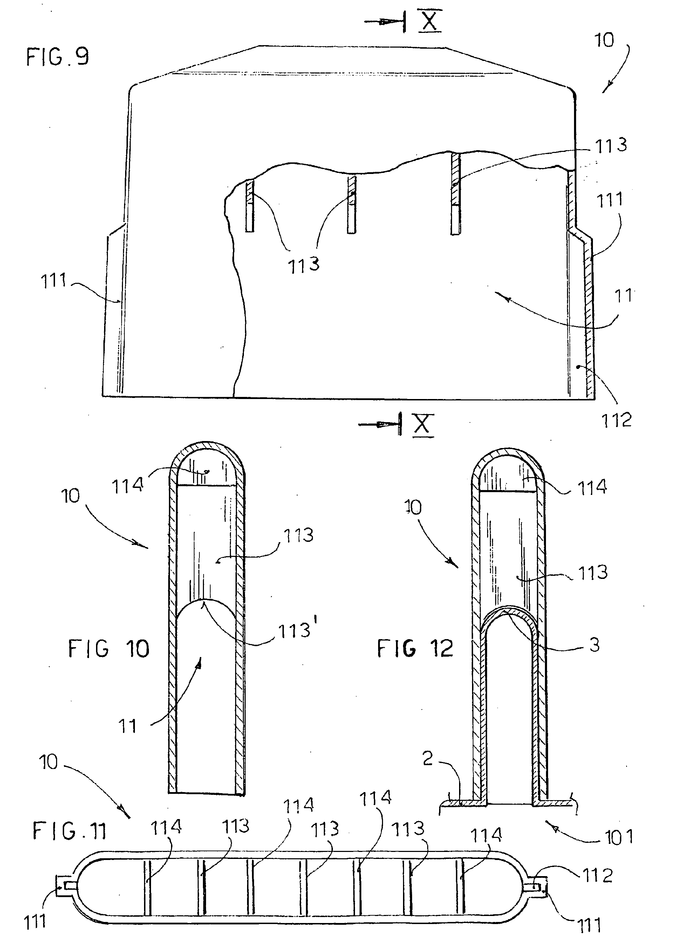

In this case the adapter element 10, shown in Figs. 9-12, to adapt to the ridges 3 of the spacer 101 has two side ribs 111 which define internally respective seats 112 wherein the side ribs 103 of the ridges 3 can be housed.

Moreover the seat 11 for housing the ridge 3 is defined by a plurality of internal transverse ribs 113 which have below a substantially curved profile 113' like the upper part of the ridges 3. In order to strengthen the upper part of the adapter 10 shorter transverse ribs 114 are provided, alternating with the long ribs 113.

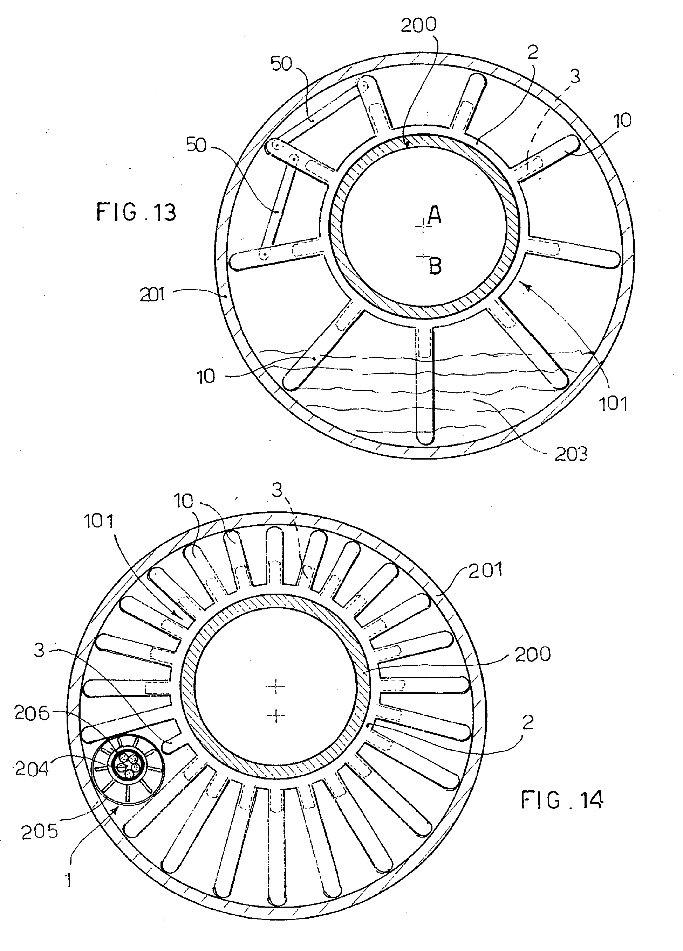

Fig. 13 shows a spacing collar formed by spacing elements 101 attached to an internal pipe 200. Adapter elements 10 of different length are mounted on the ridges 3 of the spacing elements 101. More specifically shorter adapter elements 10 are mounted on the ridges 3, which project upwards, and longer adapter elements 10 are mounted on the ridges 3 which project downwards.

As a result, when the internal pipe 200, with the spacing collar and the adapter elements 10, is inserted in an external pipe 201, the internal pipe 200 will be arranged eccentrically in relation to the external pipe 201 and its axis A will be higher than the axis B of the external pipe 201. Therefore the lower surface of the internal pipe 200 is at a level higher than its level if the internal pipe 200 were coaxial with the external pipe 201. Consequently, if there is seepage of water in the external pipe, the water level 203 which accumulates at the bottom of the external pipe 201 does not come into contact with the lower part of the internal pipe 200.

Moreover, to improve the stability of the spacing collar whereto the adapter elements 10 are attached, joining elements 50 are provided in the form of rigid strips or cables, which are slotted or restrained laterally or at the head between two or more adjacent adapter elements 10.

Referring to Fig. 14, the situation is illustrated wherein in the cavity between the internal pipe 200 and the external pipe 201 a service pipe 206 has to pass, holding - for example - a plurality of electrical cables 204. The service pipe 206 is surrounded by its spacing collar 1 so as to be distanced from its external pipe 205. In this case it is sufficient merely to remove a row of aligned adapter elements 10 in order to create a space for the passage of the service pipe 206 surrounded by its spacing collar 1 and by its external pipe 205.

## Claims

1. An adapter (10) for spacer for pipes such as gas pipelines, oil pipelines and the like, the spacer comprising at least one spacing element (1; 101) comprising a base band (2) which can be attached to the external surface of an internal pipe (200) and a plurality of ridges (3) projecting from said base band (2) so that their ends come into contact with the internal surface of an external pipe (201) to maintain it separate from said internal pipe (200), said adapter (10) comprising a base housing (11) designed to hold one of said ridges (3) to be suitable to be coupled to said ridge (3) to extend its height in accordance with the difference in diameter values between said internal pipe (200) and said external pipe (201),
**characterised in that** the upper part (14) of the adapter (10) defines a peripheral abutment edge (15) so that a first one of said adapter (10) can be inserted in the base housing (11) of a second one of said adapter (10), said peripheral abutment edge (15) providing support for said second (A) adapter (10) and thus allowing a modular build-up in height of several adapters (10).

2. An adapter (10) according to claim 1, **characterised in that** it is coupled to said ridge (3) by pressure forcing, by slotting or by snap coupling.

3. An adapter (10) according to any one of the previous claims, **characterised in that** it is attached to said ridge (3) and/or to said base band (2) by gluing or by heat sealing.

4. An adapter (10) according to any one of the previous claims, **characterised in that** it comprises a through slot (17) in its lower portion so as to allow the passage of retaining tabs (4) for the composition of several spacing elements (1).

5. An adapter (10) according to any one of the previous claims, **characterised in that** it has a substantially trapezoidal shape with a base (18) which is larger than the width of said base band (2) of the spacing element (1) so as to have two end sections (19) which project outside of said base band (2) of the spacing element (1).

6. An adapter (10) according to any one of the previous claims, **characterised in that** it comprises two side ribs (111) which define two side seats (112) designed to hold respective side ribs (103) provided in said ridge (3) of the spacing element (101).

7. A spacer (1; 101) for pipes such as gas pipelines, oil pipelines and the like, **characterised in that** it comprises adapter elements (10) according to any one of the previous claims.

8. A spacer (1; 101) according to claim 7, **characterised in that** it comprises adapter elements of different length, so as to allow an eccentric assembly of the internal pipe (200) in relation to the external pipe (201) or a calibrated assembly with several points of contact with the external pipe (201) for an improved distribution of the load on the spacing collar.

9. A spacer (1; 101) according to claim 7 or 8, **characterised in that** it comprises at least one service pipe (203) which passes in the cavity between the internal pipe (200) and the external pipe (201) in a portion wherein there are no adapter elements (10).

10. A spacer (1; 101) according to any one of claims 7 to 9, **characterised in that** it comprises at least one joining element (50) in the form of a rigid strip or of a cable which is slotted or restrained laterally or at the head between two or more adjacent adapter elements (10).

## Patentansprüche

1. Adapter (10) für einen Abstandshalter für Rohre wie zum Beispiel Gasleitungen, Ölleitungen und dergleichen, wobei der Abstandshalter mindestens ein Abstandshalterelement (1; 101) umfasst, das ein Basisband (2), das an der Außenfläche eines inneren Rohres (200) befestigt werden kann, und mehrere Wülste (3) umfasst, die von dem Basisband (2) so abstehen, dass ihre Enden mit der Innenfläche einen äußeren Rohres (201) in Kontakt kommen, um es von dem inneren Rohr (200) getrennt zu halten, wobei der Adapter (10) ein Basisgehäuse (11) umfasst, das dafür ausgelegt ist, eine der Wülste (3) so zu halten, dass es geeignet ist, mit der Wulst (3) verbunden zu werden, damit seine Höhe entsprechend der Differenz der Durchmesserwerte zwischen dem inneren Rohr (200) und dem äußeren Rohr (201) verlängert werden kann,
**dadurch gekennzeichnet, dass** der obere Teil (14) des Adapters (10) eine entlang des Randes verlaufende Anschlagkante (15) definiert, so dass ein erster der Adapter (10) in das Basisgehäuse (11) eines zweiten der Adapter (10) eingesetzt werden kann, wobei die entlang des Randes verlaufende Anschlagkante (15) eine Stütze für den zweiten der Adapter (10) bildet und so einen modularen Aufbau in der Höhe aus mehreren Adaptern (10) ermöglicht.

2. Adapter (10) nach Anspruch 1, **dadurch gekennzeichnet, dass** er durch Aufdrücken, durch Schlitzen oder durch Aufschnappen mit der Wulst (3) verbunden wird.

3. Adapter (10) nach einem der vorangehenden Ansprüche, **dadurch gekennzeichnet, dass** er durch Leimen oder durch Heißkleben an der Wulst (3) und/oder an dem Basisband (2) befestigt wird.

4. Adapter (10) nach einem der vorangehenden Ansprüche, **dadurch gekennzeichnet, dass** er einen Durchgangsschlitz (17) in seinem unteren Abschnitt umfasst, um ein Hindurchtreten von Haltenasen (4) für das Zusammensetzen mehrerer Abstandshalterelemente (1) zu ermöglichen.

5. Adapter (10) nach einem der vorangehenden Ansprüche, **dadurch gekennzeichnet, dass** er eine im Wesentlichen trapezförmige Gestalt mit einer Basis (18) aufweist, die größer als die Breite des Basisbandes (2) des Abstandshalterelements (1) ist, so dass er zwei Endsektionen (19) aufweist, die nach außerhalb des Basisbandes (2) des Abstandshalterelements (1) hervorstehen.

6. Adapter (10) nach einem der vorangehenden Ansprüche, **dadurch gekennzeichnet, dass** er zwei seitliche Rippen (111) umfasst, die zwei seitliche Sitze (112) definieren, die dafür ausgelegt sind, jeweilige seitliche Rippen (103) zu halten, die in der Wulst (3) des Abstandshalterelements (101) ausgebildet sind.

7. Abstandshalter (1; 101) für Rohre wie zum Beispiel Gasleitungen, Ölleitungen und dergleichen, **dadurch gekennzeichnet, dass** er Adapterelemente (10) nach einem der vorangehenden Ansprüche umfasst.

8. Abstandshalter (1; 101) nach Anspruch 7, **dadurch gekennzeichnet, dass** er Adapterelemente von unterschiedlicher Länge umfasst, um eine außermittige Montage des inneren Rohres (200) in Bezug auf das äußere Rohr (201) oder eine kalibrierte Montage mit mehrerer Kontaktpunkten mit dem äußeren Rohr (201) zu ermöglichen, um die auf die Abstandshaltermanschette wirkende Last besser zu verteilen.

9. Abstandshalter (1; 101) nach Anspruch 7 oder 8, **dadurch gekennzeichnet, dass** er mindestens ein Servicerohr (203) umfasst, das in dem Hohlraum zwischen dem inneren Rohr (200) und dem äußeren Rohr (201) in einem Abschnitt entlang verläuft, in dem sich keine Adapterelemente (10) befinden.

10. Abstandshalter (1; 101) nach einem der Ansprüche 7 bis 9, **dadurch gekennzeichnet, dass** er mindestens ein Verbindungselement (50) in der Form eines starren Streifens oder eines Kabels umfasst, der bzw. das geschlitzt ist oder seitlich oder am Kopf zwischen zwei oder mehr benachbarten Adapterelementen (10) gehalten wird.

## Revendications

1. Adaptateur (10) pour entretoise pour tuyaux comme des pipelines de gaz, des pipelines de pétrole et des éléments similaires, l'entretoise comprenant au moins un élément d'espacement (1 ; 101) comprenant une bande de base (2) qui peut être attachée à la surface externe d'un tuyau interne (200) et une pluralité d'arêtes (3) se projetant de ladite bande de base (2) de manière à ce que leurs extrémités entrent en contact avec la surface interne d'un tuyau externe (201) pour le maintenir séparé du tuyau interne (200), ledit adaptateur (10) comprenant un logement de base (11) conçu pour contenir l'une desdites arêtes (3) pour être apte à être couplé à ladite arête (3) pour étendre sa hauteur en fonction de la différence des valeurs de diamètre entre ledit tuyau interne (200) et ledit tuyau externe (201),
**caractérisé en ce que** la partie supérieure (14) de l'adaptateur (10) définit un bord d'aboutement périphérique (15) de manière à ce qu'un premier dudit adaptateur (10) puisse être inséré dans le logement de base (11) d'un second dudit adaptateur (10), ledit bord d'aboutement périphérique (15) fournissant un support pour ledit second dudit adaptateur (10) et permettant ainsi une accumulation modulaire en hauteur de plusieurs adaptateurs (10).

2. Adaptateur (10) selon la revendication 1, **caractérisé en ce qu'**il est couplé à ladite arête (3) en le forçant par pression, en l'insérant dans une fente ou en le couplant par enfoncement.

3. Adaptateur (10) selon l'une quelconque des revendications précédentes, **caractérisé en ce qu'**il est attaché à ladite arête (3) et/ou à ladite bande de base (2) en le collant ou en le faisant adhérer thermiquement.

4. Adaptateur (10) selon l'une quelconque des revendications précédentes, **caractérisé en ce qu'**il comprend une fente traversante (17) dans sa portion inférieure de manière à permettre le passage des attaches de fixation (4) pour la composition de plusieurs éléments d'espacement (1).

5. Adaptateur (10) selon l'une quelconque des revendications précédentes, **caractérisé en ce qu'**il a une forme sensiblement trapézoïdale avec une base (18) qui est plus grande que la largeur de ladite bande de base (2) de l'élément d'espacement (1) de manière à avoir deux sections d'extrémité (19) qui se projettent à l'extérieur de ladite bande de base (2) de l'élément d'espacement (1).

6. Adaptateur (10) selon l'une quelconque des revendications précédentes, **caractérisé en ce qu'**il comprend deux nervures latérales (111) qui définissent deux sièges latéraux (112) conçus pour contenir des nervures latérales respectives (103) fournies dans ladite arête (3) de l'élément d'espacement (101).

7. Entretoise (1; 101) pour des tuyaux comme des pipelines de gaz, des pipelines de pétrole et des éléments similaires, **caractérisée en ce qu'**elle comprend des éléments adaptateurs (10) selon l'une quelconque des revendications précédentes.

8. Entretoise (1; 101) selon la revendication 7, **caractérisée en ce qu'**elle comprend des éléments adaptateurs de longueurs différentes, de manière à permettre un assemblage excentrique du tuyau interne (200) par rapport au tuyau externe (201) ou un assemblage calibré avec plusieurs points de contact avec le tuyau externe (201) pour une répartition améliorée de la charge sur le collier d'espacement.

9. Entretoise (1; 101) selon la revendication 7 ou 8, **caractérisée en ce qu'**elle comprend au moins un tuyau de service (203) qui passe dans la cavité entre le tuyau interne (200) et le tuyau externe (201) dans une portion dans laquelle il n'y a pas d'élément adaptateur (10).

10. Entretoise (1; 101) selon l'une quelconque des revendications 7 à 9, **caractérisée en ce qu'**elle comprend au moins un élément de jonction (50) sous la forme d'une bande rigide ou d'un câble qui est inséré ou restreint latéralement ou à la tête entre deux ou plus d'éléments adaptateurs adjacents (10).
